# FASCICULE DE BREVET EUROPEEN

(11) **EP 3 589 597 B1**
(45) Date de publication et mention de la délivrance du brevet: **07.04.2021**
(21) Numéro de dépôt: 18709704.3
(22) Date de dépôt: 26.02.2018
(51) Int. Cl.: C03C 17/42, B05D 5/08

(54) **ARTICLE POUR PIECE HUMIDE COMPRENANT UN VITRAGE HYDROPHOBE**
ARTIKEL FÜR EINEN FEUCHTRAUM MIT HYDROPHOBER VERGLASUNG
ARTICLE FOR A HUMID ROOM COMPRISING HYDROPHOBIC GLAZING

(30) Priorité: 28.02.2017 FR 1751603
(43) Date de publication de la demande: 08.01.2020
(73) Titulaire: SAINT-GOBAIN GLASS FRANCE, 92400 Courbevoie (FR)
(72) Inventeur: CHERY, Vincent, 75013 Paris (FR); GOUGAUD, Corentin, 85150 La Mothe Achard (FR)
(74) Mandataire: Saint-Gobain Recherche
(86) Numéro de dépôt international: PCT/FR2018/050448
(87) Numéro de publication internationale: WO 2018/158530

(56) Documents cités:
- WO-A1-2006/089964
- WO-A1-2010/079299
- FR-A1- 2 793 889
- US-A- 4 687 707

## Description

L'invention est relative à un article, comprenant un vitrage, destiné à équiper une pièce dite humide d'un bâtiment, telle qu'une salle d'eau, une salle de bain, une cuisine, une buanderie ou tout autre environnement chaud et humide.

Plus particulièrement l'invention se rapporte à une paroi de cabine douche, à un pare-baignoire, ou encore à un miroir destiné à être utilisé dans un environnement chaud et humide, plus particulièrement dans une salle d'eau ou salle de bain, le vitrage formant tout ou partie dudit article.

Il est connu qu'un environnement humide et chaud, notamment une salle de bain, induit une corrosion des vitrages en verre jusqu'à l'apparition de traces visibles blanchâtres. La rugosité de surface résultant de cette corrosion entraîne en outre une augmentation du flou à la surface du vitrage, qui prend alors un aspect laiteux dans ses parties les plus corrodées.

Ces surfaces corrodées se salissent rapidement du fait de dépôts de saletés, notamment de calcaire ou de savon, cette salissure nécessitant l'utilisation régulière de produits d'entretien agressifs à base d'acides et/ou d'agents tensioactifs.

Il est connu, pour réduire l'encrassement de vitrages installés dans des pièces humides, de rendre la surface de ces vitrages plus hydrophobe grâce au dépôt d'une couche hydrophobe.

Dans le domaine des vitrages ou revêtements dits hydrophobes, on mentionne généralement, pour évaluer les interactions entre le vitrage et l'eau :
- l'angle de contact θ, qui permet d'évaluer le caractère plus ou moins hydrophobe d'une surface placée en position horizontale et
- le volume de glissement qui évalue plus directement la propension d'une goutte à glisser le long de la paroi du vitrage en position inclinée ou verticale, en tenant compte notamment de l'état de surface de celui-ci, en particulier de la rugosité et de l'homogénéité chimique de ladite surface.

L'angle de contact est au sens de la présente invention l'angle formé par la surface du substrat et la tangente à la goutte au point de rencontre entre l'air, le substrat et une goutte d'eau déposée par une seringue sur ledit substrat, placé en position horizontale.

La combinaison d'un angle de contact élevé et d'un faible volume de glissement permet de réduire considérablement le volume d'eau qui sèche à la surface de la paroi vitrée et donne naissance à un dépôt calcaire sur celle-ci.

Les revêtements hydrophobes pour vitrages sont typiquement à base de silicones ou de silanes fluoroalkylés, par exemple US 4 687 707, WO 2010/079299 ou WO 2006/089964.

On peut citer à titre d'exemple de verre rendu hydrophobe par dépôt d'une couche organique superficielle, le produit Aquacontrol® de la société SAINT-GOBAIN. Cependant, la durabilité de telles couches organiques hydrophobes est assez faible, probablement en raison de la sensibilité à l'hydrolyse des greffons organiques hydrophobes, et le caractère hydrophobe de la surface commence généralement à se dégrader au bout de quelques semaines ou quelques mois tout au plus. Des parties de la surface redeviennent hydrophiles tandis que d'autres restent hydrophobes. Cette inhomogénéité tend à gêner l'écoulement des gouttes d'eau le long de la paroi vitrée.

Par ailleurs la surface du verre qui n'est plus protégée se corrode progressivement au contact de l'eau du fait de la perte des cations, notamment des cations alcalins, présents initialement dans le matériau verrier. Sous l'effet de cette corrosion, la surface verrière voit sa rugosité augmenter, ce qui nuit à l'évacuation des gouttes d'eau.

Par ailleurs, si en extérieur l'évacuation des gouttes d'eau sur un vitrage hydrophobe est favorisée par la présence d'un flux d'air tel que le vent (notamment sur des vitrages automobiles), en intérieur ce n'est pas le cas. Par conséquent, les petites gouttes d'eau dont le poids n'est pas suffisamment important ne vont pas s'écouler, formant ce qu'on désigne habituellement par la « buée », et vont, là encore, laisser des traces de calcaire en séchant.

Aussi, bien qu'un revêtement hydrophobe utilisé en salle-de-bain soit appréciable pour enlever facilement les salissures, il est grandement recommandé d'essuyer la vitre à l'aide d'une raclette pour la nettoyer après projection d'eau ou formation de buée par condensation.

En résumé, les revêtements hydrophobes organiques classiques décrits précédemment présentent une efficacité limitée dans le temps contre le dépôt de saletés à la surface du verre.

L'idée à la base de la présente invention est de déposer l'agent hydrophobe organique non pas directement à la surface du verre, assez hydrophile et sensible à la corrosion, mais de recouvrir la surface du verre d'abord d'une couche minérale dure et durable, relativement plus hydrophobe que le verre sodo-calcique et beaucoup plus résistante à la corrosion par l'eau que le verre sodo-calcique. C'est sur cette couche que l'on greffe ensuite par liaison covalente un agent hydrophobe organique qui augmente encore davantage l'angle de contact d'une goutte d'eau et diminue encore davantage le volume de glissement.

La sous-couche minérale, hydrophobe et résistante à la corrosion par l'eau, est une couche d'oxyde mixte de titane et de zirconium (notée TiZrO ou TiZrOx dans la présente description, sans préjuger des rapports réels entre les atomes de Ti, Zr et O dans l'oxyde), déposée directement sur la surface du substrat verrier. Cette couche couvre la totalité d'au moins une des deux surfaces principales du substrat verrier et elle reçoit directement l'agent hydrophobe organique greffé par liaison covalente.

Lorsque l'agent hydrophobe organique, fixé à la surface de la sous-couche TiZrO, se détériore lentement au cours du temps d'utilisation du vitrage, sa disparition dans certaines zones, d'abord très limitées, ne met pas à nu des surfaces hydrophiles mais des surfaces hydrophobes qui présentent un angle de contact supérieur à 80 ° et un volume de glissement faible, proche de celui caractérisant la couche d'agent hydrophobe organique.

Grâce au caractère hydrophobe de la sous-couche mise à nue les gouttes d'eau continuent à s'écouler facilement, très peu de calcaire se forme, les dépôts calcaires s'éliminent facilement par simple essuyage et il n'est pas nécessaire d'utiliser des produits chimiques agressifs pour le nettoyage, ce qui se répercute de manière très favorable sur la durée de vie du revêtement hydrophobe organique toujours présent.

La présence de la sous-couche hydrophobe minérale prolonge ainsi la durée de vie de la surcouche hydrophobe organique dans les conditions réelles d'utilisation.

Par ailleurs, même lorsque, au bout d'un temps long, la surcouche hydrophobe organique aura disparu, le vitrage reste relativement plus hydrophobe, plus résistant à la corrosion et plus facile à nettoyer qu'un vitrage Aquacontrol® ayant perdu sa couche hydrophobe organique directement greffée sur le substrat verrier.

La présente invention a donc pour objet un article pour environnement humide telle qu'une salle de bain, comprenant un vitrage ou constitué d'un vitrage, ledit vitrage comprenant un substrat verrier revêtu sur au moins une de ses deux faces, de préférence sur chacune de ses deux faces
- d'une seule couche d'oxyde de titane et de zirconium (TiZrO), déposée directement sur le substrat verrier et ayant une épaisseur physique comprise de préférence entre 3 et 14 nanomètres, plus préférentiellement entre 5 et 13 nm, et
- d'une couche hydrophobe formée par greffage par liaison covalente d'un fluoroalkylsilane directement sur la couche à base d'un oxyde de titane et de zirconium, cette couche hydrophobe étant en contact avec l'atmosphère.

Par le terme « couche d'oxyde de titane et de zirconium », on entend au sens de la présente invention une couche d'un oxyde mixte comprenant très majoritairement des cations de titane et de zirconium. Dans un mode de réalisation préféré, l'oxyde de titane et de zirconium est constitué essentiellement dudit oxyde mixte de titane et de zirconium, sans toutefois exclure que d'autres cations, en particulier d'autres atomes métalliques tels que Al, Ga, In, B, Y, La, Ge, Si, P, As, Sb, Bi, Ce, Nb and Ta, puissent être présents dans une quantité très minoritaire par rapport à la somme des atomes de titane et de zirconium, par exemple en une quantité d'atomes inférieure à 10% de ladite somme, ou même inférieure à 5% de ladite somme, ou même en une quantité inférieure à 2% de ladite somme. L'insertion de tels cations peut notamment avoir pour but de faciliter le dépôt des couches d'oxyde sur le substrat verrier par les techniques de pulvérisation cathodique magnétron, comme indiqué dans la demande WO00/24686. La composition de la couche de TiZrO est déterminée par exemple par microsonde de Castaing (EPMA).

De préférence encore, la couche est uniquement constituée de titane, de zirconium et d'oxygène.

De préférence encore, aux impuretés inévitables près, la couche ne comprend, outre l'oxygène, que du zirconium et du titane. En particulier, de façon bien connue, les couches selon l'invention peuvent comprendre comme impureté inévitable une portion mineure de hafnium (Hf), celui-ci étant toujours présent en tant qu'impureté dans l'oxyde de zirconium commercial.

Par vitrage, on entend au sens de la présente description un article comprenant un substrat verrier, tel qu'une feuille de verre transparente avec deux faces principales et des tranches.

Par miroir, on entend un article comprenant un substrat verrier dont une des deux faces principales présente une réflexion lumineuse supérieure à 88%, notamment supérieure à 90% ou encore supérieure à 92%, mesurée selon la norme ISO 9050 (2003).

Les inventeurs ont mis en évidence de manière inattendue le caractère hydrophobe de la couche d'oxyde mixte de titane et de zirconium. Une telle propriété permet l'utilisation très avantageuse d'un tel oxyde comme sous-couche d'une couche de type Aquacontrol® à base d'un agent hydrophobe organique fluoré, greffé par liaison covalente.

La couche d'oxyde mixte de titane et de zirconium est trempable, c'est-à-dire elle conserve son caractère hydrophobe et sa résistance à la corrosion par l'eau après un traitement thermique de trempe classiquement mis en œuvre pour augmenter la résistance mécanique de vitrages. L'application de la couche de TiZrO peut donc se faire avant un traitement de trempe et/ou de bombage du vitrage de la présente invention, tandis que la couche d'agent hydrophobe organique doit être appliquée après l'étape de trempe et/ou de bombage.

Les cations titane sont de préférence majoritaires par rapport aux cations de zirconium et le rapport molaire Ti/Zr dans la couche est avantageusement compris entre 60/40 et 90/10, de préférence entre 65/35 et 85/15, et plus particulièrement entre 72/28 et 82/18.

Le substrat verrier sur lequel est déposée la couche d'oxyde de titane et de zirconium est avantageusement un verre flotté (ou verre *float*). Le dépôt peut se faire sur la face étain et/ou sur la face atmosphère sans qu'il y ait une préférence particulière pour une de ces deux faces.

Dans un mode de réalisation avantageux du procédé selon l'invention, la couche de TiZrO est déposée directement sur le substrat verrier, c'est-à-dire sur un substrat verrier qui n'a pas été soumis au préalable à un traitement d'activation, au dépôt d'une sous-couche minérale telle qu'une couche barrière ou à un traitement chimique ou mécanique de texturation visant à augmenter la rugosité de surface et le caractère diffusant du vitrage.

La face du substrat verrier portant la couche TiZrO ne présente par conséquent de préférence pas de traces de traitement chimique ou mécanique d'augmentation de la rugosité de surface.

La couche de TiZrO est donc présente sur une face non rugueuse du substrat verrier. Par surface non rugueuse, on entend une surface dont la rugosité Rq (écart moyen quadratique, en anglais *root mean square* ou RMS) telle que définie au point 4.2.2 de la norme ISO4287 et déterminée par microscopie à force atomique (AFM) sur une surface de 10 µm² est inférieure à 100 nanomètres.

Dans un mode de réalisation particulièrement préféré, la face du substrat verrier recevant la couche d'oxyde de titane et de zirconium présente une rugosité de surface Rq, déterminée par microscopie par force atomique, inférieure à 2,0 nm, de préférence inférieure à 1,0 nm.

Dans un mode de réalisation préféré de l'article selon l'invention le vitrage est un vitrage trempé et/ou bombé, présentant une résistance mécanique supérieure à celle d'un verre *float.*

Le vitrage est un vitrage transparent présentant avantageusement une réflexion lumineuse R_{L} inférieure à 15% et un flou inférieur à 2%, de préférence inférieur à 1%.

Son épaisseur est avantageusement comprise entre 3 mm et 20 mm, de préférence entre 4 et 15 mm.

Le verre formant le substrat verrier peut être un verre clair ou extra-clair, c'est-à-dire un verre dont la transmission lumineuse T_{L} est supérieure à 91%, voire supérieure à 92%, comme le verre Diamant® commercialisé par la société déposante, ou bien un verre coloré, par exemple un verre gris.

La présente invention a également pour objet un procédé de fabrication d'un article pour environnement humide, comprenant un vitrage ou constitué d'un vitrage, tel que décrit ci-avant, ledit procédé comprenant les étapes suivantes :
- dépôt, sur au moins une face d'un substrat verrier, d'une couche d'oxyde de titane et de zirconium (TiZrO) par une technique de dépôt sous vide,
- éventuellement traitement thermique de trempe et/ou de bombage du substrat ainsi revêtu de la couche d'oxyde de titane et de zirconium, et
- greffage, par liaison covalente, d'un agent hydrophobe fluoré à la surface de la couche d'oxyde de titane et de zirconium.

La couche d'oxyde de titane et de zirconium est avantageusement déposée sur le substrat verrier par dépôt physique en phase vapeur (PVD) en particulier du type dépôt sous vide, et tout particulièrement par pulvérisation cathodique assistée par champ magnétique (dépôt magnétron).

L'agent hydrophobe fluoré greffé est choisi avantageusement parmi les fluoroalkylsilanes de formule

F₃C-(CF₂)ₘ-(CH₂)ₙ-Si(X)₃₋ₚ(R)ₚ

où
m = 0 à 15, de préférence 5 à 9,
n = 1 à 5, de préférence n = 2,
p = 0, 1 ou 2, de préférence 0 ou 1, en particulier 0,
R est un groupe alkyle en C₁₋₈ ou un atome d'hydrogène,
X est un groupement hydrolysable, de préférence un atome d'halogène ou un groupe alcoxy en C₁₋₄.

On peut également envisager l'utilisation de composés de formule

F₃C-(CF₂- CF(CF₃)-O)ₘ-(CH₂-CH₂)ₙ - Si(X)₃₋ₚ(R)ₚ

ou de formule

F₃C-(CF₂- CF₂-CF₂-O)ₘ-(CH₂-CH₂)ₙ - Si(X)₃₋ₚ(R)ₚ

où m = 2 à 30, et n = 1 à 3, de préférence n = 1 et p, X et R ont la signification indiquée ci-dessus.

Les réactifs hydrophobes sont appliqués de préférence sous forme d'une solution hydro-alcoolique acide préparée extemporanément, par exemple une solution dans l'éthanol ou l'isopropanol contenant généralement moins de 15 % d'eau acidifiée, par exemple, par de l'acide chlorhydrique.

Cette solution d'hydrophobisation a de préférence une concentration en agent hydrophobe comprise entre 1 et 5 % en poids. Elle peut être appliquée sur le produit semi-fini activé au moyen d'un chiffon imbibé de ladite solution. La durée de cette mise en contact de l'agent d'hydrophobe avec la surface activée est avantageusement comprise entre 5 et 60 minutes, de préférence entre 10 et 30 minutes. L'excédent d'agent hydrophobe peut ensuite être éliminé par un rinçage à l'alcool.

Le procédé selon l'invention peut comprendre en outre, immédiatement avant l'étape de greffage de l'agent hydrophobe fluoré, une étape d'activation de la couche TiZrOₓ, par traitement plasma ou traitement chimique acide ou basique.

### Exemple

Le substrat utilisé est un verre *float* sodo-calcique, d'une épaisseur de 8 mm, commercialisé sous la référence Planiclear® par la société déposante.

La couche d'oxyde mixte de zirconium et de titane est déposée sur le substrat verrier selon une technique bien connue de dépôt de couches minces, au sein d'une enceinte de pulvérisation cathodique assistée par champ magnétique (magnétron) dans les conditions décrites ci-après.

Les vitrages comprenant le substrat verrier ainsi revêtu sont ensuite soumis à une étape de trempe thermique.

La couche est obtenue à partir d'une cible synthétisée par la technologie *plasma spraying* et à partir d'un mélange de deux poudres d'oxyde (TiO₂ et ZrO₂) présentant un rapport atomique Ti/Zr d'environ 75/25.

Cette cible est disposée dans une enceinte sous vide et pulvérisée sur le substrat verrier par un plasma obtenu à parti d'argon injecté dans l'enceinte selon les techniques classiques de l'art. Au final, on dépose sur le substrat verrier une couche d'un oxyde mixte de titane et de zirconium d'épaisseur égale à environ 7 nm, telle que mesurée par microscopie électronique.

Les analyses effectuées sur la couche ainsi déposée montrent que le rapport atomique Ti/Zr de ladite couche est de l'ordre de 77/23. Les analyses sont effectuées selon les techniques classiques de microsonde dites EPMA (Electron Probe Micro-Analysis).

Le vitrage muni de la couche selon l'invention subit ensuite un chauffage à 680°C pendant 5 minutes, suivi d'une trempe.

On greffe ensuite un agent hydrophobe organique fluoré par chiffonnage d'une solution contenant 2 % de CF₃-(CF₂)₇-(CH₂)₂-Si(OEt)₃ dans un mélange d'isopropanol et d'eau acidifiée (0,3 NHCl) (90/10).

On détermine l'angle de contact et le volume de glissement
- du substrat verrier nu,
- du substrat verrier après dépôt de la couche de TiZrOₓ et
- du substrat verrier après dépôt de la couche TiZrOₓ et greffage de l'agent hydrophobe fluoré.

L'angle de contact à l'eau 0 est mesuré avec une goutte de 5 µL déposée à l'aide d'une seringue sur la surface horizontale du substrat et à l'aide d'une caméra adaptée.

Le volume de glissement est défini comme la valeur limite au-dessous de laquelle les gouttes ne s'écoulent plus à la surface d'un substrat tenu verticalement, leur poids n'étant plus suffisant pour les entraîner vers le bas.

Si l'angle de contact θ renseigne sur le caractère hydrophobe de la couche, le volume limite de glissement est également représentatif des performances souhaitées du vitrage lors de son utilisation, notamment comme paroi de douche comme expliqué précédemment.

Ces deux valeurs sont obtenues après exposition des échantillons à l'air libre pendant 2 jours, afin de simuler les conditions d'utilisation réelles où les vitrages ne sont pas nettoyés avant utilisation.

Le test dit de « Haute Humidité » (HH) est un test de vieillissement accéléré mené dans les conditions suivantes : l'échantillon, protégé sur sa face arrière (non revêtue), est placé pendant 21 jours (HH 21) verticalement dans une enceinte chauffée à 50°C dans laquelle règne une humidité relative constante de 95%, l'eau déminéralisée étant utilisée comme source d'humidité. On mesure ensuite le flou apparu, le flou étant défini comme le rapport entre la transmission diffuse et la transmission totale. Ce flou est le résultat de l'apparition de rugosité à la surface du substrat sous l'action de la corrosion du substrat verrier. Ce test de vieillissement accéléré apparaît très représentatif des conditions réelles d'utilisation, sur une longue durée, du vitrage dans une atmosphère chaude et humide telle qu'une salle de bain.

Par flou, mesuré en pourcentage, il est entendu au sens de la présente invention la perte par diffusion de la lumière, c'est-à-dire rapport de la partie diffusée de la lumière (fraction diffuse ou T_{d}) sur la lumière directement transmise au travers du vitrage (T_{L}), généralement exprimée en pourcentages. La transmission diffuse mesure ainsi la fraction de lumière diffusée par la couche déposée à la surface du substrat de verre. Le flou est classiquement mesuré par spectroscopie, l'intégration sur tout le domaine du visible (380-780 nm) permettant la détermination de la transmission normale T_{L} et de la transmission diffuse T_{d}. Une telle mesure est obtenue par l'utilisation d'un néphélomètre (en anglais *hazemeter*). On considère qu'un vitrage reste conforme si son flou reste inférieur à 3% et de préférence est inférieur à 2% ou même inférieur à 1%. L'appareil utilisé est un dispositif « Haze-Gard ®» commercialisé par la société BYK-Gardner.

Les résultats obtenus sont regroupés dans le tableau 1 qui suit :

**Tableau 1**

| Revêtement | Aucun (Verre nu) | TiZrO | Aquacontrol® | TiZrO + Aquacontrol® |
|---|---|---|---|---|
| θ_{contact} | 30° | 84° | 105° | 105° |
| V_{glissement} | traînée | 17 µL | 16 µL | 15 µL |
| Flou (HH 21) | 3,4 % | 0,6 % | 3,2 % | 0,6 % |

On peut constater que le vitrage selon l'invention portant la double couche TiZrOx plus agent hydrophobe organique (Aquacontrol®) présente un angle de contact aussi élevée que le revêtement Aquacontrol® de l'état de la technique. Grâce à la sous-couche minérale en TiZrOₓ sa résistance au test de vieillissement accéléré est considérablement améliorée par rapport au vitrage Aquacontrol où un agent hydrophobe organique fluoré est greffé directement sur le verre sodo-calcique.

## Revendications

1. Article pour environnement humide, comprenant un vitrage ou constitué d'un vitrage, ledit vitrage comprenant un substrat verrier revêtu sur au moins une de ses deux faces, de préférence sur chacune de ses deux faces
- d'une seule couche d'oxyde de titane et de zirconium, déposée directement sur le substrat verrier et ayant une épaisseur physique comprise de préférence, entre 3 et 14 nanomètres, plus préférentiellement entre 5 et 13 nm, et
- d'une couche hydrophobe formée par greffage par liaison covalente d'un fluoroalkylsilane directement sur la couche à base d'un oxyde de titane et de zirconium, cette couche hydrophobe étant en contact avec l'atmosphère.

2. Article selon la revendication 1, dans lequel le rapport molaire Ti/Zr dans la couche d'oxyde de titane et de zirconium est compris entre 60/40 et 90/10, de préférence entre 72/28 et 82/18.

3. Article selon l'une des revendications précédentes, dans lequel le substrat verrier est un verre float.

4. Article selon la revendication 3, dans lequel la face du substrat verrier sur laquelle est déposée la couche d'oxyde de titane et de zirconium est la face étain ou la face atmosphère, ladite face ne présentant pas de traces de traitement chimique ou mécanique d'augmentation de la rugosité de surface.

5. Article selon l'une des revendications précédentes, dans lequel la face du substrat verrier sur laquelle est déposée la couche d'oxyde de titane et de zirconium présente une rugosité de surface (Rq), déterminée par microscopie par force atomique, inférieure à 2,0 nm, de préférence inférieure à 1,0 nm.

6. Article selon l'une des revendications précédentes dans lequel ledit vitrage est trempé et/ou bombé.

7. Article selon l'une des revendications précédentes dans lequel ledit vitrage présente une réflexion lumineuse inférieure à 15%.

8. Article selon l'une des revendications précédentes dans lequel ledit vitrage présente un flou inférieur à 2%, de préférence inférieur à 1%.

9. Article selon l'une des revendications précédentes dans lequel ledit substrat verrier est un verre clair ou extra-clair d'épaisseur comprise entre 3 et 20 mm.

10. Article selon l'une des revendications 1 à 8 dans lequel ledit substrat verrier est un verre coloré d'épaisseur comprise entre 3 et 20 mm.

11. Article selon l'une des revendications précédentes, **caractérisé par le fait qu'**il s'agit d'un miroir, d'une paroi de cabine de douche ou d'un pare-baignoire.

12. Procédé de fabrication d'un article selon l'une quelconque des revendications précédentes comprenant les étapes suivantes :
- dépôt, sur au moins une face d'un substrat verrier, d'une couche d'oxyde de titane et de zirconium par une technique de dépôt sous vide,
- éventuellement traitement thermique de trempe et/ou de bombage du substrat ainsi revêtu de la couche d'oxyde de titane et de zirconium, et
- greffage, par liaison covalente, d'un agent hydrophobe fluoré à la surface de la couche d'oxyde de titane et de zirconium.

13. Procédé selon la revendication 12, **caractérisé par le fait que** l'agent hydrophobe fluoré greffé est choisi parmi les fluoroalkylsilanes de formule
F₃C-(CF₂)ₘ-(CH₂)ₙ-Si(X)₃₋ₚ(R)ₚ
où
m = 0 à 15, de préférence 5 à 9,
n = 1 à 5, de préférence n = 2,
p = 0, 1 ou 2, de préférence 0 ou 1, en particulier 0,
R est un groupe alkyle en C_{1-C8} ou un atome d'hydrogène,
X est un groupement hydrolysable, de préférence un atome d'halogène ou un groupe alcoxy en C_{1-C4}.

14. Procédé selon l'une quelconque des revendications précédentes, **caractérisé par le fait que** l'agent hydrophobe est appliqué sous forme d'une solution hydro-alcoolique acide, de préférence au moyen d'un chiffon imbibé de ladite solution.

15. Procédé selon l'une quelconque des revendications précédentes, **caractérisé par le fait qu'**il comprend en outre, immédiatement avant l'étape de greffage de l'agent hydrophobe fluoré, une étape d'activation de la couche d'oxyde de titane et de zirconium, par traitement plasma ou traitement chimique acide ou basique.

## Patentansprüche

1. Artikel für einen Feuchtraum, umfassend eine Verglasung oder bestehend aus einer Verglasung, wobei die Verglasung ein Glassubstrat umfasst, das auf mindestens einer seiner zwei Flächen, vorzugsweise auf jeder seiner zwei Flächen, beschichtet ist
- mit einer einzelnen Schicht aus Titan- und Zirkoniumoxid, die direkt auf dem Glassubstrat abgeschieden ist und eine physische Dicke vorzugsweise im Bereich zwischen 3 und 14 Nanometern, mehr bevorzugt zwischen 5 und 13 nm, aufweist, und
- mit einer hydrophoben Schicht, die durch Pfropfen, durch kovalente Bindung, eines Fluoralkylsilans direkt auf die Schicht auf Basis eines Titan- und Zirkoniumoxids gebildet wird, wobei diese hydrophobe Schicht mit der Atmosphäre in Kontakt steht.

2. Artikel nach Anspruch 1, wobei das Ti/Zr-Molverhältnis in der Schicht aus Titan- und Zirkoniumoxid im Bereich zwischen 60 : 40 und 90 : 10, vorzugsweise zwischen 72 : 28 und 82 : 18 liegt.

3. Artikel nach einem der vorstehenden Ansprüche, wobei das Glassubstrat ein Floatglas ist.

4. Artikel nach Anspruch 3, wobei die Fläche des Glassubstrats, auf der die Schicht aus Titan- und Zirkoniumoxid abgeschieden ist, die Zinnfläche oder die Atmosphärenfläche ist, wobei diese Fläche keine Spuren chemischer oder mechanischer Behandlung zur Erhöhung der Oberflächenrauheit vorweist.

5. Artikel nach einem der vorstehenden Ansprüche, wobei die Fläche des Glassubstrats, auf der die Schicht aus Titan- und Zirkoniumoxid abgeschieden ist, eine durch Atomkraft-Mikroskopie bestimmte Oberflächenrauheit (Rq) von weniger als 2,0 nm, vorzugsweise von weniger als 1,0 nm, vorweist.

6. Artikel nach einem der vorstehenden Ansprüche, wobei die Verglasung gehärtet und/oder gebogen ist.

7. Artikel nach einem der vorstehenden Ansprüche, wobei die Verglasung eine Lichtreflexion von weniger als 15 % vorweist.

8. Artikel nach einem der vorstehenden Ansprüche, wobei die Verglasung eine Unklarheit von weniger als 2 %, vorzugsweise von weniger als 1 %, vorweist.

9. Artikel nach einem der vorstehenden Ansprüche, wobei das Glassubstrat ein klares oder extra klares Glas einer Dicke im Bereich zwischen 3 und 20 mm ist.

10. Artikel nach einem der Ansprüche 1 bis 8, wobei das Glassubstrat ein farbiges Glas einer Dicke im Bereich zwischen 3 und 20 mm ist.

11. Artikel nach einem der vorstehenden Ansprüche, **dadurch gekennzeichnet, dass** es sich um einen Spiegel, eine Duschkabinenwand oder einen Badewannenschirm handelt.

12. Verfahren zur Herstellung eines Artikels nach einem der vorstehenden Ansprüche, umfassend die folgenden Schritte:
- Abscheiden einer Schicht aus Titan- und Zirkoniumoxid auf mindestens einer Fläche eines Glassubstrats durch eine Vakuumabscheidungstechnik,
- optionale Wärmebehandlung zum Härten und/oder Biegen des so mit der Schicht aus Titan- und Zirkoniumoxid beschichteten Substrats und
- Pfropfen, durch kovalente Bindung, eines fluorierten hydrophoben Mittels auf die Oberfläche der Schicht aus Titan- und Zirkoniumoxid.

13. Verfahren nach Anspruch 12, **dadurch gekennzeichnet, dass** das gepfropfte fluorierte hydrophobe Mittel ausgewählt ist aus Fluoralkylsilanen der Formel
F₃C-(CF₂)ₘ-(CH₂)ₙ-Si(X)₃₋ₚ(R)ₚ
worin
m = 0 bis 15, vorzugsweise 5 bis 9,
n = 1 bis 5, vorzugsweise n = 2,
p = 0, 1 oder 2, vorzugsweise 0 oder 1, insbesondere 0,
R eine C_{1-C8}-Alkylgruppe oder ein Wasserstoffatom ist,
X eine hydrolysierbare Gruppierung, vorzugsweise ein Halogenatom oder eine C_{1-C4}-Alkoxygruppe, ist.

14. Verfahren nach einem der vorstehenden Ansprüche, **dadurch gekennzeichnet, dass** das hydrophobe Mittel in Form einer sauren, wässrigalkoholischen Lösung aufgetragen wird, vorzugsweise mittels eines mit dieser Lösung getränkten Tuches.

15. Verfahren nach einem der vorstehenden Ansprüche, **dadurch gekennzeichnet, dass** es ferner unmittelbar vor dem Schritt des Pfropfens des fluorierten hydrophoben Mittels einen Aktivierungsschritt der Schicht aus Titan- und Zirkoniumoxid durch Plasmabehandlung oder saure oder basische chemische Behandlung umfasst.

## Claims

1. An article for a humid environment, comprising a glazing or consisting of a glazing, said glazing comprising a glass substrate coated, on at least one of its two faces, preferably on each of its two faces:
- with a single layer of titanium zirconium oxide, deposited directly on the glass substrate and having a physical thickness preferably of between 3 and 14 nanometers, more preferably between 5 and 13 nm, and
- with a hydrophobic layer formed by grafting, by covalent bonding, a fluoroalkylsilane directly to the layer based on a titanium zirconium oxide, this hydrophobic layer being in contact with the atmosphere.

2. The article as claimed in claim 1, in which the Ti/Zr molar ratio in the titanium zirconium oxide layer is between 60/40 and 90/10, preferably between 72/28 and 82/18.

3. The article as claimed in either of the preceding claims, in which the glass substrate is a float glass.

4. The article as claimed in claim 3, in which the face of the glass substrate on which the titanium zirconium oxide layer is deposited is the tin face or the atmosphere face, said face not exhibiting traces of chemical or mechanical treatment for increasing the surface roughness.

5. The article as claimed in one of the preceding claims, in which the face of the glass substrate on which the titanium zirconium oxide layer is deposited exhibits a surface roughness (Rq), determined by atomic force microscopy, of less than 2.0 nm, preferably of less than 1.0 nm.

6. The article as claimed in one of the preceding claims, in which said glazing is tempered and/or bent.

7. The article as claimed in one of the preceding claims, in which said glazing exhibits a light reflection of less than 15%.

8. The article as claimed in one of the preceding claims, in which said glazing exhibits a haze of less than 2%, preferably of less than 1%.

9. The article as claimed in one of the preceding claims, in which said glass substrate is a clear or extra-clear glass with a thickness of between 3 and 20 mm.

10. The article as claimed in one of claims 1 to 8, in which said glass substrate is a colored glass with a thickness of between 3 and 20 mm.

11. The article as claimed in one of the preceding claims, **characterized in that** it is a mirror, a shower stall wall or a bath screen.

12. A process for the manufacture of an article as claimed in any one of the preceding claims, comprising the following stages:
- deposition, on at least one face of a glass substrate, of a titanium zirconium oxide layer by a vacuum deposition technique,
- optionally tempering and/or bending heat treatment of the substrate thus coated with the titanium zirconium oxide layer, and
- grafting a fluorinated hydrophobic agent, by covalent bonding, to the surface of the titanium zirconium oxide layer.

13. The process as claimed in claim 12, **characterized in that** the grafted fluorinated hydrophobic agent is chosen from fluoroalkylsilanes of formula:
F₃C-(CF₂)ₘ-(CH₂)ₙ-Si(X)₃₋ₚ(R)ₚ
where
m = 0 to 15, preferably 5 to 9,
n = 1 to 5, preferably n = 2,
p = 0, 1 or 2, preferably 0 or 1, in particular 0,
R is a C₁₋₈ alkyl group or a hydrogen atom,
X is a hydrolyzable group, preferably a halogen atom or a C₁₋₄ alkoxy group.

14. The process as claimed in any one of the preceding claims, **characterized in that** the hydrophobic agent is applied in the form of an acidic aqueous/alcoholic solution, preferably using a rag impregnated with said solution.

15. The process as claimed in any one of the preceding claims, **characterized in that** it additionally comprises, immediately before the stage of grafting the fluorinated hydrophobic agent, a stage of activation of the titanium zirconium oxide layer by plasma treatment or acidic or basic chemical treatment.
